# EUROPEAN PATENT APPLICATION

(11) **EP 4 213 105 A1**
(43) Date of publication of application: **19.07.2023**
(21) Application number: 22275006.9
(22) Date of filing: 18.01.2022
(51) Int. Cl.: G06V 10/12, G06V 40/16

(54) **GAZE ESTIMATION SYSTEM AND METHOD THEREOF**

(71) Applicant: e-con Systems India Private Limited, Chennai 600032 (IN)
(72) Inventor: RAJENDRAN, Parthasarathy, 600032 Tamil Nadu (IN)
(74) Representative: Abel & Imray LLP

(57) **Abstract**

The present invention relates to a system to estimate audience parameters with the following features: A system (106) which processes the inputs from (a) a monocular camera (102) placed top-center/bottom-center of a target signage board (101), (b) a camera tilt calibration module (103), (c) Camera parameters (104) (d) signage parameters (110) (e) the output from the ML systems (105) to process and analyse the images to aid as input to the gaze estimation module(106) and produce output (107) which give the person gaze at the target and other addtional parameter like gender, person height and depth from signage and provides data regarding the user interest and engagement levels with the target signage board.

## Description

### FIELD OF INVENTION

This invention comes under the field of gesture recognition (gaze), more specifically for estimating gaze at a specific pre-defined target object using feature-based methods. The present invention involves the system or method for estimating audience head gaze at a target signage board by estimating person depth and height using the monocular camera.

### BACKGROUND OF THE INVENTION

The field of marketing showcases the featured product/s in the best way possible to garner attention and convert the attention into sales for the given product/s. The explosion of technology and innovation in the past twenty years have led to specialized marketing techniques which rely on technology to gather real-time information about the needs, likes, and desires of the potential customer, to obtain real-time information whether the particular advertisements, targeted showcasing, product carnivals achieve their expected results, to study the audience reactions and to make product changes effectively and promptly to cater to the audience.

In the past few decades, market analysis consisted of in-person surveys, telephonic questionnaires, supermarkets/store surveys, and product movement studies, mailed reviews, or studying public footage manually to ascertain the reactions of the audience for particular advertisements, signage boards, etc. With the evolution of machine learning, image processing, and connectivity, real-time processing of the audience information is made possible and with the rise of social media and the tremendous amount of user behaviour and information now being made available, instant tangible results can be achieved by targeting the audience behaviour and analysing it.

Cameras are placed at strategic locations in public places and the attention, interest, and reactions of the audience towards the targeted signage boards, advertisements are captured, analyzed using systems that employ certain algorithms that extract and study only certain features to maintain the privacy of the individual, and the analysis is utilized to gauge the success of the advertisement.

A monocular (single-eyed) system is a single camera device which is placed in a strategical position and location to capture images/videos that can be processed. A stereo vision system is a system with two cameras, placed at a certain distance from each other.

Several monocular cameras are available in the market today. The requisite features of the monocular camera are lens elements, compact size, mounting features, night vision or low light capability, connectivity to systems, etc.

A few patents based on audience reaction estimation have been given below:
US8401248B1: Method and system for measuring emotional and attentional response to dynamic digital media content - This patent relates to a method and system to provide an automatic measurement of people's responses to dynamic digital media, based on changes in their facial expressions and attention to specific content. First, the method detects and tracks faces from the audience. It then localizes each of the faces and facial features to extract emotion-sensitive features of the face by applying emotion-sensitive feature filters, to determine the facial muscle actions of the face based on the extracted emotion-sensitive features. The changes in facial muscle actions are then converted to the changes in affective state, called an emotion trajectory. On the other hand, the method also estimates eye gaze based on extracted eye images and three-dimensional facial pose of the face based on localized facial images. The gaze direction of the person, is estimated based on the estimated eye gaze and the three-dimensional facial pose of the person. The gaze target on the media display is then estimated based on the estimated gaze direction and the position of the person. Finally, the response of the person to the dynamic digital media content is determined by analyzing the emotion trajectory in relation to the time and screen positions of the specific digital media sub-content that the person is watching.
US7921036B1: Method and system for dynamically targeting content based on automatic demographics and behaviour analysis - this paper relates to a method and system for selectively executing content on a display based on the automatic recognition of predefined characteristics, including visually perceptible attributes, such as the demographic profile of people identified automatically using a sequence of image frames from a video stream. The present invention detects the images of the individual or the people from captured images. The present invention automatically extracts visually perceptible attributes, including demographic information, local behavior analysis, and emotional status, of the individual or the people from the images in real-time. The visually perceptible attributes further comprise height, skin color, hair color, the number of people in the scene, time spent by the people, and whether a person looking at the display. A targeted media is selected from a set of media pools, according to the automatically extracted, visually perceptible attributes and the feedback from the people.
US9965870B2: Camera calibration method using a calibration target - This patent relates to calibration methods that use a calibration target for obtaining the intrinsic and extrinsic camera parameters of one or more cameras are. The methods can include acquiring, with each camera, a sequence of target images representing the calibration target in different target poses and at different acquisition times. The methods can include identifying reference images from the target images and defining volume bins, angle bins, and multi-camera bins into which the reference images are stored. The reference images can be used to determine the intrinsic and extrinsic parameters of one or more cameras. In some implementations, the calibration methods can enable a user to monitor the progress of the calibration process, for example by providing an interactive calibration target including an input/output user interface to guide the user in real-time during the acquisition of the target images and/or sensors to provide positional information about the target poses.
US20160210503A1: Real-time eye tracking for human computer interaction - In this patent, a gaze direction determining system and method is provided. A two-camera system may detect the face from a fixed, wide-angle camera, estimates a rough location for the eye region using an eye detector based on topographic features, and directs another active pan-tilt-zoom camera to focus in on this eye region. An eye gaze estimation approach employs point-of-regard (PoG) tracking on a large viewing screen. To allow for greater head pose freedom, a calibration approach is provided to find the 3D eyeball location, eyeball radius, and fovea position. Both the iris center and iris contour points are mapped to the eyeball sphere (creating a 3D iris disk) to get the optical axis; then the fovea rotated accordingly and the final, visual axis gaze direction computed.

In the above-discussed patents, the systems employ stereo cameras, iris detection techniques and personal height estimation have been done to study the audience populace and estimate their reactions.

The present invention relates to a system that employs a monocular camera either at the top-center or bottom-center of the target signage board, and the camera input, camera tiltcalibration input is processed and analysed to produce information regarding the person head gaze at the signage.

### OBJECTIVE OF THE INVENTION

The main objective of the system is to estimate the audience head gaze at a target signage board by estimating person depth and height using a monocular camera. Other objective which is targetted is the estimation process is completely done locally without streaming the camera data outside the sytem and only the metadata is sent out of the system. The secondary objective of the system is to estimate the person's level of interest and determine the success of the target signage board.

### SUMMARY OF THE INVENTION

The following summary is provided to facilitate a clear understanding of the new features in the disclosed embodiment and it is not intended to be a full, detailed description. A detailed description of all the aspects of the disclosed invention can be understood by reviewing the full specification, the drawing, and the claims, and the abstract, as a whole.

The major problem addressed by the invention is the estimation of a person's head gaze at a target signage board by estimating that person's height and depth in the environment, by using the monocular camera. The system or method consists of mounting a monocular camera at the appropriate position near the target signage board. The system consists of a camera and main processing unit, the processing unit does the whole processing locally and sends the target gaze information out.. The main system contains a method for calculating the head gaze at the signage board using ML (Machine learning) based algorithms and some basic geometries. Based on the features from the ML algorithm and other inputs like: signage parameters (like the height, size, etc), the tilt parameters, the height and position of the camera t th system then calculates a person's head gaze or level of interest in the target signage board by estimating the person's height,depth and head pose. The system can also perform the camera's tilt calibration to aid the accuracy of the estimation. By calculating the head gaze near the target signage board, the level of interest or other information regarding the viewer can be obtained. This can be used to determine the success or failure of the content displayed on the target signage board, to gauge the audience details like the age group/ethnicity/socio-economic specifics, and also to determine which factors affect the audience interest in the content on display at the target signage board.

In accordance with another aspect of the invention there is provided a system for audience head gaze estimation which consists of:
a. Input from a monocular camera (102);
b. Input of camera tilt angle from the tilt calibration module (103);
c. Signage parameters (104); and
d. Learning input for ML based models (105) which processes the inputs using several ML models to estimate the following:
   i. Person gender
   ii. Person Head Pose
   iii. Person Face Keypoints
Wherein, the head pose is used to provide feedback for the gaze estimation module (106) there by gauge the audience interest towards the displayed signage board (101).

The input from the monocular camera may be images or video.

The camera tilt calibration model may provide input like tilt parameters with known intrinsic and extrinsic parameters.

The signage parameters may include the location, position, dimensions of the board, the camera positioning height, angle, etc.

In accordance with another aspect of the invention there is provided a method for audience head gaze estimation, wherein, system (106) utilizes the camera input, the camera parameters, the signage parameters, the output from the learning systems to process and analyse the images and produce output (107) which give the person gaze and gender, calculated from the head pose, person height and depth estimation and other information present in the input images from the camera.

The audience head gaze may be estimated to provide information regarding the user interest and engagement levels with the target signage board.

### BRIEF DESCRIPTION OF THE DRAWINGS

The manner in which the proposed system works is given a more particular description below, briefly summarized above, may be had by reference to the components, some of which is illustrated in the appended drawing It is to be noted; however, that the appended drawing illustrates only typical embodiments of this system and are therefore should not be considered limiting of its scope, for the system may admit to other equally effective embodiments.

Throughout the document, the same drawing reference numerals will be understood to refer to the same elements and features.

The features and advantages of the present proposed system will become more apparent from the following detailed description along with the accompanying figures, which forms a part of this application and in which:

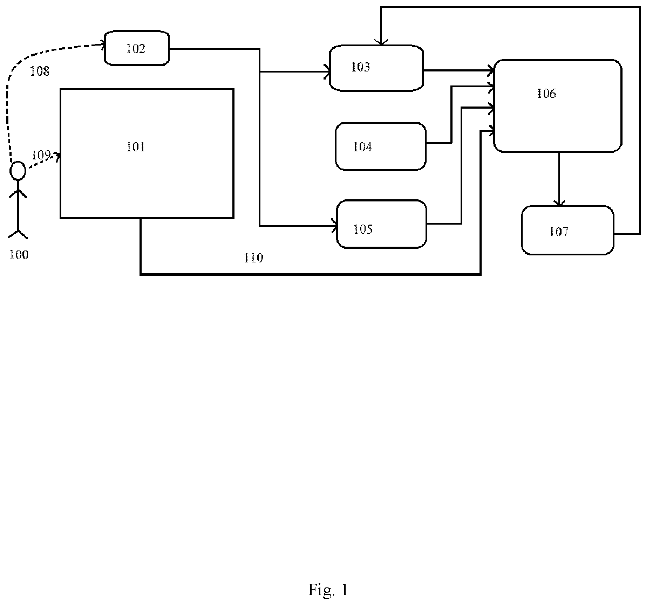

Fig 1: Block Diagram describing the components and the workflow of the system in accordance with the present invention;

### DETAILED DESCRIPTION OF THE INVENTION

The principles of operation, design configurations, and evaluation values in these nonlimiting examples can be varied and are merely cited to illustrate at least one embodiment of the invention, without limiting the scope thereof.

The embodiments disclosed herein can be expressed in different forms and should not be considered as limited to the listed embodiments in the disclosed invention. The various embodiments outlined in the subsequent sections are construed such that it provides a complete and a thorough understanding of the disclosed invention, by clearly describing the scope of the invention, for those skilled in the art.

The present embodiment of the invention consists of fixing a monocular camera (102) over the top or bottom centre of the digital signage board (101) and programming the sensor's intrinsic and extrinsic parameters and gauging the camera tilt parameters using the Tilt calibration module (103). The camera captures videos or images of the audience or people and sends the videos/images to the machine learning systems which do inference in the image to obtain the head pose , gender and face key point information. This input is fed to the Head Gaze Estimation Module (106) which takes in other inputs, from the camera tilt calibration module (103), the signage parameters (110), the intrinsic and other parameters (104), the output from the learning systems (105) which provide input like head pose, face keypoints, etc. The head gaze estimation module estimates the person depth based on the face keypoints and gender information from Machine Learning Module and produce output the head gaze output (107) which shows the person's interest, level of engagement, and target estimation and also provide input for adjusting the camera parameters using the camera tilt calibration module.

In the present embodiment of the invention, the board signage parameters include location, height or position of the board, the dimensions of the board, the relative positioning of the camera with respect to the board dimensions, etc. The extrinsic parameters are measured and programmed based on the location of the mount. The tilt parameter is computed based on the tilt calibration module as part of the system. The intrinsic parameters of the monocular camera can be programmed. The distortion parameters which provide correction for the lens distortion are also provided as input to the system. The system utilizes multiple open-source Machine Learning (ML) models for calculating head pose, gender, face keypoints based on the input from the camera module. This output is fed as one of the inputs for the Head Gaze Estimation Module which determines the target head gaze at the signage board by estimating the perosn depth and height using a proprietary approach.

In one embodiment of the present invention, the system or method for audience head gaze estimation can be used to obtain information for the ideal location and positioning for advertisements, displays, target signage boards, design inputs for arenas for theatres, movies, conference halls to provide optimum user engagement.

In one embodiment of the present invention, the system or method for audience head gaze estimation can be used to obtain the audience information, to study the audience specificity based on gender, age, and other parameters, and using them to design/alter products or marketing strategies.

In one embodiment of the present invention, the system or method for audience head gaze estimation can be used to gauge the audience interest and engagement and determine the success of the advertisement/program/etc.

In one embodiment of the present invention, the system or method for audience head gaze estimation can be used to gauge the audience and change the content of the advertisement/display/signage board/television or other display dynamically to suit the audience engagement levels.

In one embodiment of the present invention, the system or method for audience head gaze estimation can be used to gauge the audience interest, and to switch on or off the display or to change the programs based on the interest of the viewer and to provide a personalized ranking of programs or to find different programs suited to the user's interest.

In one embodiment of the present invention, the system or method for audience head gaze estimation can be used to display personalized user-targeted advertisements based on input from the user social media, recent search information, and head gaze positioning.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above-described embodiment, method, and examples, but by all embodiments and methods within the scope of the invention as claimed.

### REFERENCE NUMERALS

- 100: Audience/Person
- 101: Target Signage Board
- 102: Monocular Camera module
- 103: Camera tilt calibration module
- 104: Camera parameters
- 105: Machine Learning model/s
- 106: Head Gaze Estimation Module
- 107: Head Gaze Estimation Output
- 108: Person-Camera tilt angle, distance
- 109: Person Gaze of Interest
- 110: Signage parameters

## Claims

1. A system for audience head gaze estimation for a displayed signage board (101), arranged to receive:
a. Input from a monocular camera (102);
b. Input of camera tilt angle from a tilt calibration module (103);
c. Signage parameters (104) of the displayed signage board (101); and
d. Learning input for machine learning, ML, based models (105) which process the inputs and signage parameters using several ML models to estimate:
i. Person gender
ii. Person Head Pose
iii. Person Face Keypoints
wherein, the person head pose is used by a gaze estimation module (106) to produce a head gaze output (107) that indicates the audience interest towards the displayed signage board (101).

2. The system for audience head gaze estimation, as claimed in claim 1, wherein, the input from the monocular camera comprises images and/or video.

3. The system for audience head gaze estimation, as claimed in claim 1 or 2, wherein, the camera tilt calibration model provides input like tilt parameters with known intrinsic and extrinsic parameters.

4. The system for audience head gaze estimation, as claimed in any preceding claim, wherein, the signage parameters include one or more of the location, position, dimensions of the displayed signage board, the camera positioning height, angle.

5. A method for audience head gaze estimation for a displayed signage board (101), wherein, a system (106) utilizes camera input, .camera parameters, signage parameters, the output from learning systems that process and analyse the camera input and produce output (107) which gives person gaze and gender, calculated from head pose, person height and depth estimation and other information present in the camera input.

6. The method for audience head gaze estimation, as claimed in claim 6, wherein, the audience head gaze is estimated to provide information regarding the user interest and engagement levels with the displayed signage board.
